# EUROPÄISCHE PATENTANMELDUNG

(11) **EP 3 984 681 A1**
(43) Veröffentlichungstag der Anmeldung: **20.04.2022**
(21) Anmeldenummer: 20202469.1
(22) Anmeldetag: 19.10.2020
(51) Int. Cl.: B23K 9/12, B23K 9/173, B23K 9/067

(54) **VERFAHREN ZUR VORBEREITUNG EINES AUTOMATISIERTEN SCHWEISSVERFAHRENS AUF EINEN SCHWEISSPROZESS UND SCHWEISSVORRICHTUNG ZUR DURCHFÜHRUNG EINES AUTOMATISIERTEN SCHWEISSVERFAHRENS**

(71) Anmelder: FRONIUS INTERNATIONAL GmbH, 4643 Pettenbach (AT)
(72) Erfinder: SÖLLINGER, Dominik, 4643 Pettenbach (AT); WALDHÖR, Andreas, 4643 Pettenbach (AT); ARTELSMAIR, Josef, 4643 Pettenbach (AT)
(74) Vertreter: SONN Patentanwälte OG

(57) **Zusammenfassung**

Verfahren zur Vorbereitung eines automatisierten Schweißverfahrens auf einen Schweißprozess (SP), wobei ein Schweißbrenner (2) mit einem abschmelzbaren Schweißdraht (3) während einer Bewegungsphase (BP) mit einer Positioniergeschwindigkeit (v_{R}) von einer Ist-Position (IST) zu einer Startposition (A) einer Schweißnaht (X) bewegt wird, und die Distanz (d) des Schweißdrahtendes (4) zum Werkstück (W) während einer Anschleichphase (AP) überbrückt wird, sowie eine Schweißvorrichtung (1). Erfindungsgemäß wird die Anschleichphase (AP) während der Bewegungsphase (BP) eingeleitet, und der Schweißdraht (3) mit einer ersten vorgegebenen Vorwärtsgeschwindigkeit (v_{dV1}) in Richtung Werkstück (W) bewegt, bis eine erste Berührung des Schweißdrahtendes (4) mit dem Werkstück (W) detektiert wird, nach Detektion der ersten Berührung der Schweißdraht (3) vom Werkstück (W) wegbewegt und danach wiederkehrend bei Detektion weiterer Berührungen der Schweißdraht (3) vom Werkstück (W) wegbewegt und die Berührung wieder unterbrochen, und die Bewegung des Schweißdrahts (3) zum Werkstück (W) und Wegbewegung vom Werkstück (W) nach einer weiteren Berührung wiederholt, bis die Startposition (A) erreicht wird.

## Beschreibung

Die Erfindung betrifft ein Verfahren zur Vorbereitung eines automatisierten Schweißverfahrens auf einen Schweißprozess, wobei ein Schweißbrenner mit einem abschmelzbaren Schweißdraht während einer Bewegungsphase mit einer Positioniergeschwindigkeit von einer Ist-Position zu einer gewünschten Startposition einer während des Schweißprozesses herzustellenden Schweißnaht bewegt wird, und die Distanz des Endes des Schweißdrahts zum Werkstück überbrückt wird, indem der Schweißdraht während einer Anschleichphase zum Werkstück bewegt wird, bis das Schweißdrahtende das Werkstück berührt, wonach der Schweißprozess an der Startposition mit Zündung eines Lichtbogens gestartet wird.

Die Erfindung betrifft weiters eine Schweißvorrichtung zur Durchführung eines automatisierten Schweißverfahrens, mit einem Schweißbrenner mit abschmelzbarem Schweißdraht, einer Schweißstromquelle, einer Vorschubvorrichtung für den Schweißdraht und einer Steuereinrichtung.

Bei einem herkömmlichen Schweißzündablauf bei einem automatisierten Schweißverfahren mit einem abschmelzbaren Schweißdraht, beispielsweise einem MIG/MAG (Metall-Inertgas/Metall-Aktivgas)-Schweißen positioniert der Roboter den Schweißbrenner auf die Startposition der Schweißnaht und sendet den Schweißstartbefehl an das Schweißgerät. Die Schweißstromquelle startet erst mit dem Zündprozess, wenn das Startsignal vom Roboter von der Stromquelle empfangen wurde. Der Zündprozess wird durch die Schweißstromquelle eingeleitet, indem der Drahtvorschub gestartet und der Schweißdraht mit der Leerlaufspannung beaufschlagt wird. Damit der Lichtbogen mittels einer Berührungszündung gezündet werden kann, muss während einer sogenannten Anschleichphase die Distanz zwischen dem freien Schweißdrahtende und dem Werkstück überbrückt werden. Für eine stabile Zündung des Lichtbogens wird während des Zündprozesses und auch während der Anschleichphase eine sehr geringe Drahtvorschubgeschwindigkeit gewählt.

In Abhängigkeit der eingestellten Drahtvorschubgeschwindigkeit, während der Anschleichphase, und der Distanz zwischen Schweißdraht und Werkstück ergibt sich somit, nachdem der Schweißbrenner die Startposition erreicht hat, noch eine zusätzliche entsprechende Verzögerung des Schweißstarts, welche je nach Distanz zwischen dem freien Schweißdrahtende und dem Werkstück im Bereich zwischen 50 ms und 500 ms liegen kann. Bei einem Werkstück mit vielen einzelnen Schweißnähten summieren sich bei jeder Zündung diese Verzögerungen, wodurch es zu einer entsprechenden unerwünschten Erhöhung der Taktzeit einer Schweißzelle kommt.

Die EP 2 216 125 A1 beschreibt beispielsweise ein Verfahren zum Steuern des Zündvorgangs eines Schweißverfahrens mit entsprechender Detektion der Berührung des Schweißdrahtendes an der Werkstückoberfläche und nachfolgender Steuerung der Vor- und Rückbewegung des Schweißdrahts.

Die EP 3 421 167 A1 beschreibt ein Verfahren und eine Vorrichtung zur Abtastung einer Werkstückoberfläche eines metallischen Werkstückes, wobei zur Erfassung von Abtastwerten an Abtastpositionen der Schweißdraht wiederkehrend zur Werkstückoberfläche hin- und zurückbewegt wird und ein Kontakt des Schweißdrahtendes mit dem Werkstück detektiert wird.

Die Aufgabe der vorliegenden Erfindung besteht in der Schaffung eines oben genannten Verfahrens zur Vorbereitung eines automatisierten Schweißverfahrens auf einen Schweißprozess sowie einer Schweißvorrichtung zur Durchführung eines automatisierten Schweißverfahrens, durch welche die oben beschriebenen Verzögerungen beim Zündprozess minimiert und somit Taktzeiten optimiert werden können. Die oben beschriebenen Nachteile des Standes der Technik sollen vermieden oder zumindest reduziert werden.

Gelöst wird die erfindungsgemäße Aufgabe in verfahrensmäßiger Hinsicht dadurch, dass die Anschleichphase während der Bewegungsphase eingeleitet wird, und während der Anschleichphase der Schweißdraht mit einer ersten vorgegebenen Vorwärtsgeschwindigkeit in Richtung Werkstück bewegt wird, bis eine erste Berührung des Schweißdrahtendes mit dem Werkstück detektiert wird, nach Detektion der ersten Berührung der Schweißdraht vom Werkstück wegbewegt wird, und danach wiederkehrend bei Detektion weiterer Berührungen der Schweißdraht vom Werkstück wegbewegt und die Berührung wieder unterbrochen wird, und die Bewegung des Schweißdrahts zum Werkstück bis zur Berührung des Schweißdrahtendes mit dem Werkstück und Wegbewegung vom Werkstück nach der Berührung wiederholt wird, bis die Startposition des Schweißbrenners erreicht wird. Erfindungsgemäß wird ein Ablauf durchgeführt, bei dem bereits während der Bewegungsphase des Schweißbrenners von seiner Ist-Position zur gewünschten Startposition zu Beginn der gewünschten Schweißbahn die Robotersteuerung einen Befehl an die Stromquelle sendet, um den Schweißdraht bzw. dessen freies Ende auf eine minimale Distanz zum Werkstück vorzubereiten. Beim Stand der Technik hingegen wird die Anschleichphase erst nach Erreichen der Startposition der Schweißnaht gestartet. Die Schweißstromquelle startet erfindungsgemäß also während der Bewegungsphase einen Ablauf, indem der Schweißdraht in Richtung des Werkstücks gefördert wird. Wenn der Schweißdraht das Werkstück berührt, wird diese Berührung detektiert und der Schweißdraht wieder vom Werkstück weg, also rückwärts bewegt, bis die Berührung wieder unterbrochen wird. Danach wird der Schweißdraht so positioniert, dass das Schweißdrahtende möglichst nahe, beispielsweise 0,05 mm bis 1 mm vom Werkstück entfernt ist. Anschließend wird der Schweißdraht wiederkehrend vorwärtsbewegt oder auch gestoppt. Bei abermaliger Berührung mit dem Werkstück wird wieder eine vorgegebene Distanz rückwärts bewegt. Dieser Ablauf wird zyklisch durchgeführt, wodurch sich immer ein minimaler Abstand zwischen Schweißdrahtende und Werkstück einstellt. Wird nun die endgültige Startposition vom Roboter erreicht und der Schweißprozess gestartet, muss nur noch eine minimale Distanz von beispielsweise 1 mm überbrückt werden. Durch diesen Ablauf ist die Anschleichphase auf nur wenige Millisekunden reduziert und der Einfluss der Anzahl der Zündungen auf die Taktzeit eines Schweißverfahrens kann stark reduziert werden. Das erfindungsgemäße Verfahren ist relativ einfach und kostengünstig umsetzbar.

Vorteilhafter Weise wird während der Anschleichphase nach Detektion der ersten Berührung der Schweißdraht mit einer vorgegebenen Rückwärtsgeschwindigkeit während einer vorgegebenen ersten Zeitdauer vom Werkstück wegbewegt, und danach wiederkehrend bei Detektion weiterer Berührungen der Schweißdraht mit einer vorgegebenen Rückwärtsgeschwindigkeit während einer vorgegebenen ersten Zeitdauer vom Werkstück wegbewegt, wobei vorzugsweise die Rückwärtsgeschwindigkeit bei jeder Wegbewegung des Schweißdrahts vom Werkstück weg individuell angepasst wird, bis die Startposition des Schweißbrenners erreicht wird. Durch die individuelle Vorgabe entsprechend fixer Parameter für die Rückwärtsgeschwindigkeit des Schweißdrahtes und die Zeitdauer der Rückwärtsbewegung kann das Verfahren relativ einfach umgesetzt werden.

Gemäß einem weiteren Merkmal der Erfindung ist vorgesehen, dass während der Anschleichphase nach der Rückwärtsbewegung des Schweißdrahts vom Werkstück nach Detektion einer Berührung des Schweißdrahtendes mit dem Werkstück der Schweißdraht mit einer vorgegebenen zweiten Vorwärtsgeschwindigkeit über eine vorgegebene zweite Zeitdauer in Richtung Werkstück bewegt wird. Da sich der Schweißdraht nach der ersten Berührung mit dem Werkstück bereits in der Nähe der Oberfläche des Werkstücks befindet, ist es vorteilhaft, diese zweite Vorwärtsgeschwindigkeit geringer als die erste Vorwärtsgeschwindigkeit vor der ersten Berührung des Schweißdrahtendes mit dem Werkstück zu wählen.

Wenn während der Anschleichphase nach der Rückwärtsbewegung des Schweißdrahts vom Werkstück nach Detektion einer Berührung des Schweißdrahtendes mit dem Werkstück der Schweißdraht eine vorgegebene Wegstrecke in Richtung Werkstück bewegt wird, kann verhindert werden, dass eine zu große freie Drahtlänge aus dem Schweißbrenner ragt, welche beim Berühren der Werkstückoberfläche verbogen werden könnte.

Vorzugsweise wird die Anschleichphase eine vorgegebene Zeitspanne nach Beginn der Bewegungsphase eingeleitet. Durch eine derartige im Allgemeinen gering ausgebildete Zeitverzögerung kann verhindert werden, dass die Anschleichphase zu früh begonnen wird, während der Schweißbrenner noch relativ weit vom Werkstück entfernt ist.

Die Berührung des Schweißdrahtendes mit dem Werkstück kann beispielsweise über einen Einbruch der Schweißspannung detektiert werden. Dabei wird der Schweißdraht während der Anschleichphase mit einer entsprechenden Leerlaufspannung beaufschlagt und durch Einbruch der Leerlaufspannung die Berührung des Schweißdrahtendes mit dem metallischen Werkstück, also ein Kurzschluss zwischen Schweißdraht und Werkstück detektiert.

Die Berührung des Schweißdrahtendes mit dem Werkstück kann alternativ oder zusätzlich auch über eine Vorschubvorrichtung für den Schweißdraht ermittelt werden. Dabei wird durch Erfassung der Kraft oder Kraftänderung am Motor oder auch durch eine Drehzahländerung der Vorschubvorrichtung die Berührung des Schweißdrahtendes mit dem Werkstück detektiert. Ferner kann eine erhöhte Leistungsaufnahme oder Stromaufnahme der Vorschubvorrichtung auf eine Berührung des Schweißdrahts mit dem Werkstück hinweisen. Diese Detektionsmethode ist gegenüber der oben beschriebenen elektrischen Detektionsmethode robuster in Bezug auf allfällige am Schweißdrahtende anhaftende Schlacke, welche durch die isolierende Wirkung eine zuverlässige Kurzschlussdetektion verhindern könnte. In Spezialfällen könnten auch Vibrationen oder akustische Signale bei Berührung des Schweißdrahtendes mit dem Werkstück zur Detektion herangezogen werden. Es ist in Spezialfällen auch möglich, die Berührung optisch über ein Kamerasystem zu erfassen.

Wenn die Rückwärtsgeschwindigkeit des Schweißdrahts während der Anschleichphase größer ist, als die Positioniergeschwindigkeit des Schweißbrenners in Richtung Werkstück während der Bewegungsphase, kann sichergestellt werden, dass eine Berührung des Schweißdrahtendes mit dem Werkstück wieder unterbrochen wird. Die Rückwärtsgeschwindigkeit des Schweißdrahts ist insbesondere im Mittel mindestens 1,5 mal so groß, bevorzugt mindestens 2 mal so groß, besonders bevorzugt mindestens 5 mal so groß wie die Positioniergeschwindigkeit des Schweißbrenners in Richtung Werkstück. Ist die mittlere Positioniergeschwindigkeit des Schweißbrenners in Richtung des Werkstücks nicht bekannt, so sollte mindestens der maximale Wert der Positioniergeschwindigkeit des Schweißbrenners in Richtung des Werkstücks als Grundlage für die Rückwärtsgeschwindigkeit des Schweißdrahts zu Grunde gelegt werden. Ansonsten würde der Schweißdraht ab der ersten Berührung dauerhaft das Werkstück bis zur Startposition berühren. Ist die Positioniergeschwindigkeit des Schweißbrenners in Richtung des Werkstücks nicht bekannt, so wäre es natürlich auch möglich, für die Rückwärtsgeschwindigkeit des Schweißdrahts eine geringere Geschwindigkeit zu wählen, als für die Positioniergeschwindigkeit des Schweißbrenners in Richtung des Werkstücks zu Grunde gelegt wurde. Hierbei müsste die Dauer des Kurzschlusses des Schweißdrahtendes mit dem Werkstück überwacht werden und ein Grenzwert für die Dauer des Kurzschlusses vorher festgelegt werden. Wird während der Anschleichphase ein Kurzschluss festgestellt und der Grenzwert für die Dauer des Kurzschlusses erreicht oder überschritten, so kann eine bestimmte Aktion ausgelöst werden. Eine mögliche Aktion wäre, dass die Rückwärtsgeschwindigkeit des Schweißdrahts größer als die maximale Positioniergeschwindigkeit des Schweißbrenners in Richtung des Werkstücks gesetzt wird. Eine weitere mögliche Aktion wäre, die Rückwärtsgeschwindigkeit des Schweißdrahts beispielsweise dynamisch oder stufenweise bzw. zyklisch so lange zu erhöhen, bis der Kurzschluss aufgebrochen wird.

Wenn die Vorwärtsbewegung des Schweißdrahts in Richtung Werkstück während der Anschleichphase nach Erreichen einer vorgegebenen maximalen freien Drahtlänge gestoppt wird, kann verhindert werden, dass ein zu langes freies Schweißdrahtstück aus dem Schweißbrenner bzw. Kontaktrohr ragt, welches bei abermaliger Berührung mit dem Werkstück leicht verbogen werden könnte.

Insbesondere wird die Vorwärtsbewegung des Schweißdrahts in Richtung Werkstück während der Anschleichphase vor der ersten Berührung des Schweißdrahtendes mit dem Werkstück nach Erreichen einer vorgegebenen maximalen freien Drahtlänge von 5 mm bis 50 mm, vorzugsweise 20 mm bis 30 mm, gestoppt. Diese Werte stellen je nach Material und Durchmesser des Schweißdrahts geeignete Längen dar, bei welchen es zu keiner Verbiegung des Schweißdrahts bei Berührung mit dem Werkstück kommt.

Vorteilhafterweise wird der Schweißdraht während der Anschleichphase mit einer ersten vorgegebenen Vorwärtsgeschwindigkeit zwischen 0,5 m/min und 200 m/min, insbesondere zwischen 1,5 m/min und 20 m/min, in Richtung Werkstück bewegt. Dies stellt geeignete Werte für die erste Vorwärtsbewegung des Schweißdrahts während der Bewegung des Schweißbrenners von der Ist-Position zur Startposition dar.

Während der Anschleichphase nach der Rückwärtsbewegung des Schweißdrahts vom Werkstück nach Detektion einer Berührung des Schweißdrahtendes mit dem Werkstück wird der Schweißdraht mit einer vorgegebenen zweiten Vorwärtsgeschwindigkeit zwischen 0,5 m/min und 200 m/min, insbesondere zwischen 1,0 m/min und 10 m/ min, in Richtung Werkstück bewegt. Da sich der Schweißdraht nach der ersten Berührung mit dem Werkstück bereits relativ nahe am Werkstück befindet, ist es zweckmäßig die zweite Vorwärtsgeschwindigkeit geringer als die erste Vorwärtsgeschwindigkeit zu wählen.

Während der Anschleichphase wird der Schweißdraht vorzugsweise mit einer vorgegebenen Rückwärtsgeschwindigkeit zwischen 0,5 m/min und 200 m/min, insbesondere zwischen 5 m/min und 60 m/min, vom Werkstück wegbewegt. Die Rückbewegung kann wiederum rascher erfolgen als die Vorwärtsbewegung und kann individuell eingestellt werden.

Wenn während der Anschleichphase eine vorgegebene Zeitdauer nach der Detektion der ersten Berührung des Schweißdrahtendes mit dem Werkstück ein Schutzgas aktiviert wird, kann der Verbrauch an Schutzgas reduziert und können somit Kosten gespart werden, da das Schutzgas erst kurz vor Beginn des Schweißverfahrens bzw. Zündverfahrens zugeschaltet wird, wenn es benötigt wird. Die vorgegebene Zeitdauer kann beispielsweise 0 bis 10 s betragen. Ebenso ist es denkbar, dass die Zeitdauer durch eine vorhergehende Lernphase und Parameterfindung des Schweißverfahrens, in Kombination mit einer lernfähigen Schweißvorrichtung, ermittelt und maximiert wird, um die Menge an verbrauchtem Schutzgas und folglich die Kosten des Schutzgases zu minimieren, bei gleichbleibender Qualität der Schweißnaht.

Gelöst wird die erfindungsgemäße Aufgabe auch durch eine oben erwähnte Schweißvorrichtung zur Durchführung eines automatisierten Schweißverfahrens, wobei die Steuereinrichtung zur Durchführung des oben beschriebenen Verfahrens ausgebildet ist. Zu den dadurch erzielbaren Vorteilen wird auf die obige Beschreibung des Verfahrens verwiesen. Die Schweißvorrichtung ist relativ leicht realisierbar, da die notwendigen Komponenten, wie die Steuerung der Bewegung des Schweißdrahts sowie die notwendigen Komponenten zur Detektion einer Berührung des Schweißdrahtendes mit dem Werkstück in der Regel bereits vorhanden sind.

Die vorliegende Erfindung wird anhand der beigefügten Zeichnungen näher erläutert. Darin zeigen:

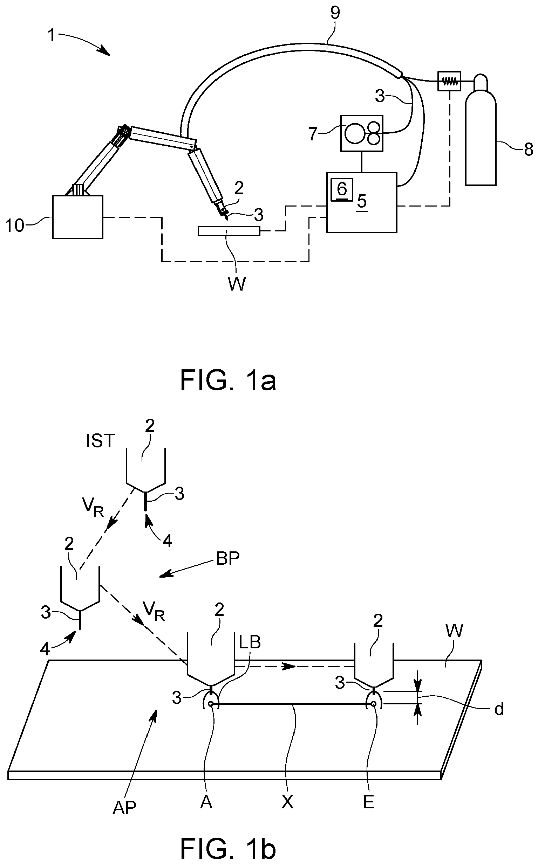

- Fig. 1a: ein schematisches Bild einer Schweißvorrichtung zur Durchführung eines automatisierten Schweißverfahrens;
- Fig. 1b: eine Darstellung der Bewegung eines Schweißbrenners zur Startposition einer Schweißnaht und während der Durchführung eines Schweißprozesses;

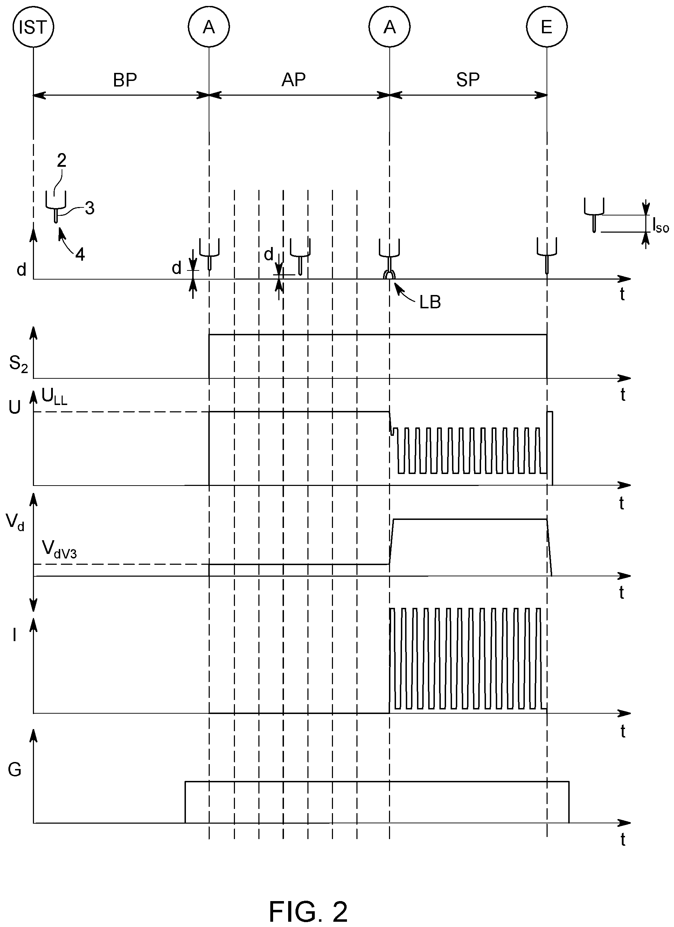

- Fig. 2: die zeitlichen Verläufe der Positionierbewegung eines den Schweißbrenner tragenden Schweißroboters, des Abstands des Endes des abschmelzbaren Schweißdrahts vom Werkstück, des Schweißstartbefehls, der Schweißspannung, der Vorschubgeschwindigkeit des Schweißdrahts, des Schweißstroms und der Aktivierung des Schutzgases vor der Durchführung eines Schweißprozesses nach dem Stand der Technik;

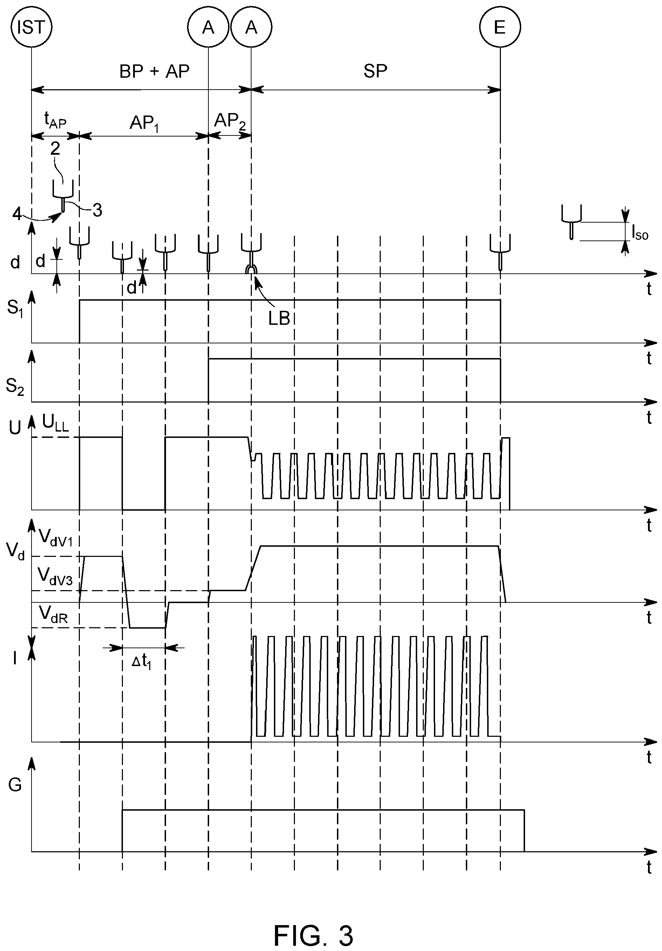

- Fig. 3: die zeitlichen Verläufe der Positionierbewegung eines den Schweißbrenner tragenden Schweißroboters, des Abstands des Endes des abschmelzbaren Schweißdrahts vom Werkstück, des Startbefehls für die Anschleichphase, des Schweißstartbefehls, der Schweißspannung, der Vorschubgeschwindigkeit des Schweißdrahts, des Schweißstroms und der Aktivierung des Schutzgases vor der Durchführung eines Schweißprozesses nach einer ersten Ausführungsform des erfindungsgemäßen Verfahrens; und

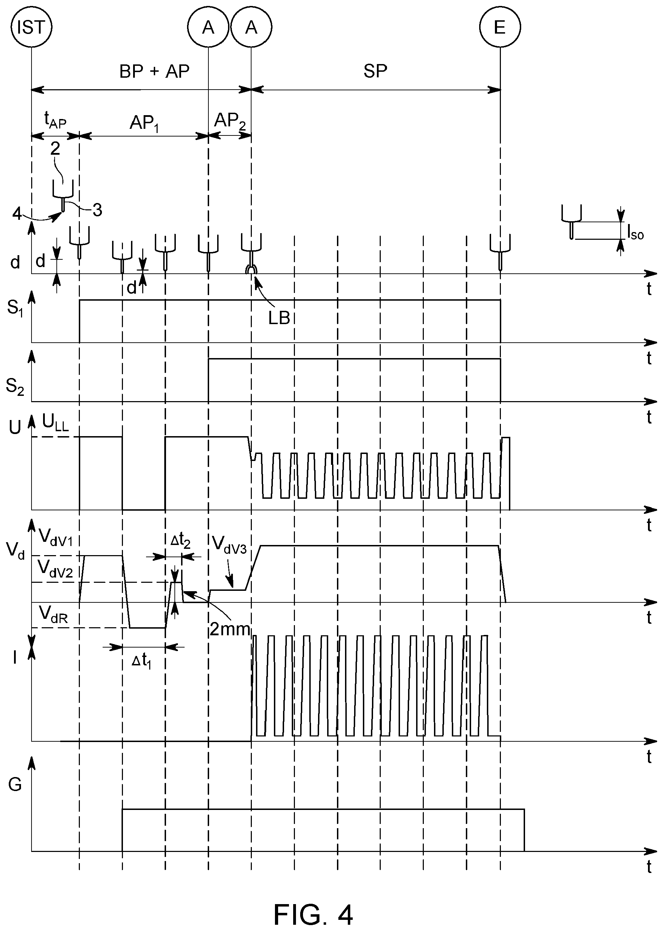

- Fig. 4: die zeitlichen Verläufe der Positionierbewegung eines den Schweißbrenner tragenden Schweißroboters, des Abstands des Endes des abschmelzbaren Schweißdrahts vom Werkstück, des Startbefehls für die Anschleichphase, des Schweißstartbefehls, der Schweißspannung, der Vorschubgeschwindigkeit des Schweißdrahts, des Schweißstroms und der Aktivierung des Schutzgases G vor der Durchführung eines Schweißprozesses nach einer zweiten Ausführungsform des erfindungsgemäßen Verfahrens.

Fig. 1a zeigt ein schematisches Bild einer Schweißvorrichtung 1 zur Durchführung eines automatisierten Schweißverfahrens. Die Schweißvorrichtung 1 beinhaltet einen Schweißbrenner 2 für einen abschmelzbaren Schweißdraht 3, welcher für das automatisierte Schweißverfahren von einem Roboter 10 oder ähnlichen Manipulator bewegt wird. Der Schweißbrenner 2 ist über ein Schlauchpaket 9 mit einer Schweißstromquelle 5 und einer Vorschubvorrichtung 7 sowie üblicherweise mit einem Gasspeicher 8 für ein Schutzgas G verbunden. In der Schweißstromquelle 5 befindet sich eine entsprechende Steuereinrichtung 6, welche die zeitlichen Abläufe sämtlicher Komponenten vorgibt.

Fig. 1b zeigt die Darstellung der Bewegung eines Schweißbrenners 2 zur Startposition A einer Schweißnaht X und Durchführung eines Schweißprozesses SP nach dem Stand der Technik. Vor Beginn eines automatisierten Schweißverfahrens befindet sich der Schweißbrenner 2 auf einer bestimmten Ist-Position IST. Bevor ein Schweißprozess SP, bei dem eine Schweißnaht X von einer Startposition A zu einer Endposition E geschweißt werden soll, begonnen wird, muss der Schweißbrenner 2 während einer Bewegungsphase BP von der Ist-Position IST zur gewünschten Startposition A bewegt werden. Die Bewegung erfolgt mit einer entsprechenden Positioniergeschwindigkeit v_{R} des Schweißbrenners 2. Nach der Bewegungsphase BP wird die Distanz d des Endes 4 des Schweißdrahts 3 zum Werkstück W überbrückt, indem der Schweißdraht 3 während einer anschließenden Anschleichphase AP mit einer üblicherweise relativ geringen Vorwärtsgeschwindigkeit zum Werkstück W bewegt wird, bis das Schweißdrahtende 4 das Werkstück W berührt. Nach der Berührung kann der Schweißprozess SP mit Zündung des Lichtbogens LB gestartet werden. Die Anschleichphase AP kann mitunter relativ lang, beispielsweise zwischen 50 ms und 500 ms betragen, was bei einer Vielzahl an Schweißnähten X zu unerwünschten Verzögerungen bei der Taktzeit führen kann.

Erfindungsgemäß wird daher die Anschleichphase AP bereits während der Bewegungsphase BP eingeleitet, und während der Anschleichphase AP der Schweißdraht 3 mit einer ersten vorgegebenen Vorwärtsgeschwindigkeit v_{dV1} in Richtung Werkstück W bewegt, bis eine erste Berührung des Schweißdrahtendes 4 mit dem Werkstück W detektiert wird. Nach der Detektion der ersten Berührung des Schweißdrahtendes 4 mit dem Werkstück W wird der Schweißdraht 3 wieder vom Werkstück W wegbewegt und danach wiederkehrend bei Detektion weiterer Berührungen der Schweißdraht 3 vom Werkstück W wegbewegt und die Berührung wieder unterbrochen, und die Bewegung des Schweißdrahts 3 zum Werkstück W bis zur Berührung des Schweißdrahtendes 4 mit dem Werkstück W und Wegbewegung vom Werkstück W nach der Berührung wiederholt wird, bis die Startposition A des Schweißbrenners 2 erreicht wird. Es erfolgt also schon während der Bewegungsphase BP eine Annäherung des Schweißdrahtendes 4 zur Oberfläche des Werkstücks W, sodass bei Erreichen des Schweißbrenners 2 an der Startposition A der Schweißnaht X das Schweißdrahtende 4 stets nur einen geringen Abstand d vom Werkstück W entfernt ist und gleich mit dem Zündprozess fortgefahren und der Schweißprozess SP begonnen werden kann.

Fig. 2 zeigt schematisch die zeitlichen Verläufe der Positionierbewegung eines vom Schweißroboter 10 getragenen Schweißbrenners 2, des Abstands d des Schweißdrahtendes 4 des abschmelzbaren Schweißdrahts 3 vom Werkstück W, des Schweißstartbefehls S2, der Schweißspannung U, der Vorschubgeschwindigkeit v_{d} des Schweißdrahts 3, des Schweißstroms I und der Aktivierung des Schutzgases G vor der Durchführung eines Schweißprozesses SP nach dem Stand der Technik. Während einer Bewegungsphase BP wird der Schweißbrenner 2 durch den Roboter 10 mit einer Positioniergeschwindigkeit v_{R} zur Startposition A der Schweißnaht X bewegt. Danach wird während der Anschleichphase AP der Schweißdraht 3 zum Werkstück W bewegt, wodurch die Distanz d zwischen Schweißdrahtende 4 und Oberfläche des Werkstücks W immer mehr verringert wird. Um zu verhindern, dass der Schweißdraht 3 mit einer zu großen Geschwindigkeit auf die Oberfläche des Werkstücks W trifft, wird während der Anschleichphase AP eine relativ geringe Vorwärtsgeschwindigkeit v_{dV3} des Schweißdrahts 3 gewählt. Dementsprechend lange kann die Anschleichphase AP dauern. Während der Anschleichphase AP wird der Schweißdraht 3 mit der Leerlaufspannung U_{LL} beaufschlagt. Berührt das Schweißdrahtende 4 die Oberfläche des Werkstücks W, wird der Einbruch der Leerlaufspannung U_{LL} detektiert und es kann ein Lichtbogen LB gezündet werden, worauf der Schweißstrom I entsprechend ansteigt und der Schweißprozess SP gestartet werden kann. Während des Schweißprozesses SP wird der Schweißstrom I bzw. die Schweißspannung U und die Vorschubgeschwindigkeit v_{d} des Schweißdrahts 3 entsprechend geregelt, bis die Endposition E der Schweißnaht X erreicht wird. Danach wird der Schweißprozess SP beendet. Bei der üblichen Verwendung eines Schutzgases G, beispielsweise Argons, wird die Zuführung des Schutzgases G bereits mit Beginn oder während der Bewegungsphase BP gestartet, weshalb vor der Zündung des Lichtbogens LB mit Beginn des Schweißprozesses SP eine relativ große Menge an Schutzgas G verschwendet wird.

Fig. 3 zeigt die zeitlichen Verläufe der Positionierbewegung eines den Schweißbrenner 2 tragenden Schweißroboters 10, des Abstands d des Schweißdrahtendes 4 des abschmelzbaren Schweißdrahts 3 vom Werkstück W, des Startbefehls S1 für die Anschleichphase AP, des Schweißstartbefehls S2, der Schweißspannung U, der Vorschubgeschwindigkeit v_{d} des Schweißdrahts 3, des Schweißstroms I und der Aktivierung des Schutzgases G vor der Durchführung eines Schweißprozesses SP nach einer ersten Ausführungsform des erfindungsgemäßen Verfahrens. Im Gegensatz zum Stand der Technik (Fig. 2) wird bereits während der Bewegungsphase BP, während der der Schweißbrenner 2 durch den Roboter 10 mit einer Positioniergeschwindigkeit v_{R} von der Ist-Position IST zur Startposition A der Schweißnaht X bewegt wird, die Anschleichphase AP durchgeführt und die Distanz d des Schweißdrahtendes 4 zur Oberfläche des Werkstücks W verringert. Dies erfolgt dadurch, dass der Schweißdraht 3 mit einer ersten vorgegebenen Vorwärtsgeschwindigkeit v_{dV1} in Richtung Werkstück W bewegt wird, bis eine erste Berührung des Schweißdrahtendes 4 mit dem Werkstück W detektiert wird. Der Abstand d des Schweißdrahtendes 4 zur Oberfläche des Werkstücks W ändert sich während der Anschleichphase AP stetig durch die Vorwärts- und Rückwärtsbewegung des Schweißdrahts 3 und liegt nach der ersten Berührung des Schweißdrahtendes 4 mit der Oberfläche des Werkstücks W vorzugsweise zwischen 0 mm und einem durch die vorgegebene Rückwärtsgeschwindigkeit v_{dR} des Schweißdrahts 3 und die vorgegebene erste Zeitdauer Δt₁ definierten maximalen Wert. Die Detektion kann durch Einbruch der Leerlaufspannung U_{LL} oder durch Messung der Kraft oder Kraftänderung am Motor oder auch durch Detektion einer Drehzahländerung einer Vorschubvorrichtung 7 erfolgen. Nach Detektion der ersten Berührung wird der Schweißdraht 3 mit einer Rückwärtsgeschwindigkeit v_{dR} vom Werkstück W wegbewegt und die Berührung wieder unterbrochen. Dabei kann die Rückwärtsbewegung des Schweißdrahts 3 eine vorgegebene erste Zeitspanne Δt₁ lang erfolgen, wobei die vorgegebene erste Zeitspanne Δt₁ mindestens der Dauer des Kurzschlusses des Schweißdrahtendes 4 mit dem Werkstück W entspricht. Danach wird der Schweißdraht 3 in diesem Ausführungsbeispiel gestoppt.

Wenn während der Anschleichphase AP nach der Rückwärtsbewegung des Schweißdrahts 3 vom Werkstück W nach Detektion einer Berührung des Schweißdrahtendes 4 mit dem Werkstück W der Schweißdraht 3 eine vorgegebene Wegstrecke Δl in Richtung Werkstück W bewegt wird, kann verhindert werden, dass eine zu große freie Drahtlänge lₛₒ ("Stick-out") aus dem Schweißbrenner 3 ragt, welche beim Berühren der Werkstückoberfläche verbogen werden könnte (nicht dargestellt). Ein derartiger Fall könnte auftreten, wenn sich im Bewegungspfad des Schweißdrahts 3 bzw. des Schweißdrahtendes 4 während der Positionierung Unregelmäßigkeiten auf einer oder auch auf mehreren Werkstückoberflächen befinden. Unter diesem Bewegungspfad während der Positionierung versteht man jenen Bereich im Raum, welcher während der Anschleichphase AP durch das Schweißdrahtende 4 durchfahren bzw. aufgespannt wird. Dieser Bewegungspfad setzt sich somit einerseits aus der Bewegung des Schweißroboters 10 von der Ist-Position IST zur Startposition A und andererseits durch die überlagerte Vorwärts- und Rückwärtsbewegung des Schweißdrahts 3 zusammen. Eine Verbiegung des freien Schweißdrahtendes 4 bei der Berührung des Werkstücks W könnte auftreten, wenn sich im Bewegungspfad, im Bereich einer oder mehrerer Werkstückoberflächen Spalten, Fügespalte, Löcher, Poren, Bohrungen, grobe oder ungleichmäßige mechanische Bearbeitungsriefen oder ähnliche Unregelmäßigkeiten befinden und dadurch keine Berührung mit einer Werkstückoberfläche erfolgt. Ferner können auch Erhebungen bzw. erhabene Stellen an der Werkstückoberfläche zu Problemen führen. Hier seien beispielsweise unzureichend entgratete Werkstücke W, unregelmäßige Fügespalte, Verunreinigungen, Schweißspritzer aber auch allgemeine Oberflächenfehler der Werkstücke W genannt. Ferner könnten auch Werkstücke W mit einer allgemeinen Oberflächentextur, einer gerichteten Textur oder einer ungewöhnlich hohen Oberflächenrauheit den Schweißdraht 3 ungewollt verbiegen. Der Prozess der Vorwärts- und Rückwärtsbewegung des Schweißdrahts 3 könnte so lange wiederholt werden, bis der Schweißbrenner 2 die Startposition A der Schweißnaht X erreicht hat. Danach wird der Lichtbogen LB gezündet und der Schweißprozess SP gestartet. Nach Erreichen der Endposition E der Schweißnaht X wird der Schweißprozess SP beendet. Dadurch, dass während der Bewegungsphase BP schon die Anschleichphase AP durchgeführt wird und die Distanz d des Schweißdrahtendes 4 vom Werkstück W minimiert bzw. überbrückt wird, kann die Anschleichphase AP gegenüber dem Stand der Technik zeitlich deutlich verringert und somit die Taktzeit des Schweißverfahrens erhöht werden.

Die Anschleichphase AP kann in eine erste Anschleichphase AP1, welche bereits während der Bewegungsphase BP des Schweißroboters 10 durchgeführt wird und eine zweite Anschleichphase AP2, welche nach Erreichen der Startposition A der Schweißnaht X durchgeführt wird, unterteilt werden. Dabei ist der erste Anschleichphase AP1 der erfindungsgemäße Teil der Anschleichphase AP, während die zweite Anschleichphase AP2 der aus dem Stand der Technik bekannten Anschleichphase AP entspricht.

Die Zuführung des Schutzgases G kann in Abhängigkeit der Detektion der ersten Berührung des Schweißdrahtendes 4 mit dem Werkstück W oder eine vorgegebene Zeitdauer Δt_{G} nach der Detektion der Berührung erfolgen, wodurch Schutzgas G während der Bewegungsphase BP gespart werden kann. In Figur 3 ist eine vorgegebene Zeitdauer Δt_{G} von 0 s, d.h. ein Einschalten des Schutzgases G sofort nach der ersten Berührung des Schweißdrahtendes 4 mit dem Werkstück W dargestellt. Daher ist die vorgegebene Zeitdauer Δt_{G} in Fig. 3 nicht explizit eingezeichnet.

Fig. 4 zeigt die zeitlichen Verläufe der Positionierbewegung eines vom Schweißroboter 10 getragenen Schweißbrenners 2, des Abstands d des Schweißdrahtendes 4 des abschmelzbaren Schweißdrahts 3 vom Werkstück W, des Startbefehls S1 für die Anschleichphase AP, des Schweißstartbefehls S2, der Schweißspannung U, der Vorschubgeschwindigkeit v_{d} des Schweißdrahts 3, des Schweißstroms I und der Aktivierung des Schutzgases G vor der Durchführung eines Schweißprozesses SP nach einer zweiten Ausführungsform des erfindungsgemäßen Verfahrens. Im Gegensatz zur Ausführungsform gemäß Fig. 3 wird hier der Schweißdraht 3 nach der Rückwärtsbewegung nach der Detektion der ersten Berührung des Schweißdrahtendes 4 mit dem Werkstück W nicht gestoppt, sondern mit einer vorgegebenen zweiten Vorwärtsgeschwindigkeit V_{dV2} in Richtung Werkstück W bewegt. Die Vorwärtsbewegung des Schweißdrahts 3 mit der vorgegebenen zweiten Vorwärtsgeschwindigkeit V_{dV2} kann über eine vorgegebene zweite Zeitdauer Δt₂ durchgeführt werden. Dies wird vorzugsweise dann angewendet, wenn das verwendete Drahtvorschubsystem (Drahtvorschubmotor) eine höhere Trägheit aufweist, wodurch sich nach Ende einer Rückwärtsbewegung ein größerer Abstand des Schweißdrahtendes 4 zum Werkstück W einstellt. Durch die abermalige Vorwärtsbewegung des Schweißdrahts 3 für eine bestimmte Zeitdauer Δt₂ wird der Abstand geringstmöglich gehalten. Nach Detektion der nächsten Berührung des Schweißdrahtendes 4 mit dem Werkstück W könnte wieder eine Rückwärtsbewegung des Schweißdrahts mit der Rückwärtsgeschwindigkeit v_{dR} vom Werkstück W weg erfolgen (in Fig. 4 nicht dargestellt). Nach Erreichen der Startposition A wird der Lichtbogen LB gezündet und der Schweißprozess SP gestartet. Die Zuführung des Schutzgases G kann wieder in Abhängigkeit der Detektion der ersten Berührung des Schweißdrahtendes 4 mit dem Werkstück W oder eine vorgegebene Zeitdauer Δt_{G} nach der Detektion der Berührung erfolgen. Auch in Figur 4 ist eine vorgegebene Zeitdauer Δt_{G} von 0 s, d.h. ein Einschalten des Schutzgases G sofort nach der ersten Berührung des Schweißdrahtendes 4 mit dem Werkstück W dargestellt. Daher ist die vorgegebene Zeitdauer Δt_{G} in Fig. 4 nicht explizit eingezeichnet.

Auch hier kann die Anschleichphase AP in eine erste Anschleichphase AP1, welche bereits während der Bewegungsphase BP des Schweißroboters 10 durchgeführt wird und eine zweite Anschleichphase AP2, welche nach Erreichen der Startposition A der Schweißnaht X durchgeführt wird, unterteilt werden.

Wie im obersten Zeitdiagramm der Ausführungsform gemäß Fig. 4 angedeutet, kann die Anschleichphase AP auch eine vorgegebene Zeitspanne Δt_{AP} nach Beginn der Bewegungsphase BP, also nach Beginn der Bewegung des Schweißbrenners 2 von der Ist-Position IST in Richtung Startposition A eingeleitet werden. Beispielsweise kann diese Zeitspanne Δt_{AP1} zwischen 200 ms und 2000 ms betragen. Das gegenständige Verfahren zur Vorbereitung eines automatisierten Schweißverfahrens auf einen Schweißprozess SP und die dazu vorgesehene Schweißvorrichtung 1 zur Durchführung eines automatisierten Schweißverfahrens ermöglicht eine Reduktion der Zeitverzögerung während der Anschleichphase AP, wodurch der Schweißprozess SP rascher gestartet und auch Schutzgas G eingespart werden kann werden kann.

## Patentansprüche

1. Verfahren zur Vorbereitung eines automatisierten Schweißverfahrens auf einen Schweißprozess (SP), wobei ein Schweißbrenner (2) mit einem abschmelzbaren Schweißdraht (3) während einer Bewegungsphase (BP) mit einer Positioniergeschwindigkeit (v_{R}) von einer Ist-Position (IST) zu einer gewünschten Startposition (A) einer während des Schweißprozesses (SP) herzustellenden Schweißnaht (X) bewegt wird, und die Distanz (d) des Endes (4) des Schweißdrahts (3) zum Werkstück (W) überbrückt wird, indem der Schweißdraht (3) während einer Anschleichphase (AP) zum Werkstück (W) bewegt wird, bis das Schweißdrahtende (4) das Werkstück (W) berührt, wonach der Schweißprozess (SP) an der Startposition (A) mit Zündung eines Lichtbogens (LB) gestartet wird, **dadurch gekennzeichnet, dass** die Anschleichphase (AP) während der Bewegungsphase (BP) eingeleitet wird, und während der Anschleichphase (AP) der Schweißdraht (3) mit einer ersten vorgegebenen Vorwärtsgeschwindigkeit (v_{dV1}) in Richtung Werkstück (W) bewegt wird, bis eine erste Berührung des Schweißdrahtendes (4) mit dem Werkstück (W) detektiert wird, nach Detektion der ersten Berührung der Schweißdraht (3) vom Werkstück (W) wegbewegt wird, und danach wiederkehrend bei Detektion weiterer Berührungen der Schweißdraht (3) vom Werkstück (W) wegbewegt und die Berührung wieder unterbrochen wird, und die Bewegung des Schweißdrahts (3) zum Werkstück (W) bis zur Berührung des Schweißdrahtendes (4) mit dem Werkstück (W) und Wegbewegung vom Werkstück (W) nach der Berührung wiederholt wird, bis die Startposition (A) des Schweißbrenners (2) erreicht wird.

2. Verfahren nach Anspruch 1, **dadurch gekennzeichnet, dass** während der Anschleichphase (AP) nach Detektion der ersten Berührung der Schweißdraht (3) mit einer vorgegebenen Rückwärtsgeschwindigkeit (v_{dR}) während einer vorgegebenen ersten Zeitdauer (Δt₁) vom Werkstück (W) wegbewegt wird, und danach wiederkehrend bei Detektion weiterer Berührungen der Schweißdraht (3) mit einer vorgegebenen Rückwärtsgeschwindigkeit (v_{dR}) während einer vorgegebenen ersten Zeitdauer (Δt₁) vom Werkstück (W) wegbewegt wird, wobei vorzugsweise die Rückwärtsgeschwindigkeit (v_{dR}) bei jeder Wegbewegung des Schweißdrahts (3) vom Werkstück (W) weg individuell angepasst wird, bis die Startposition (A) des Schweißbrenners (2) erreicht wird.

3. Verfahren nach Anspruch 1 oder 2, **dadurch gekennzeichnet, dass** während der Anschleichphase (AP) nach der Rückwärtsbewegung des Schweißdrahts (3) vom Werkstück (W) nach Detektion einer Berührung des Schweißdrahtendes (4) mit dem Werkstück (W) der Schweißdraht (3) mit einer vorgegebenen zweiten Vorwärtsgeschwindigkeit (v_{dV2}) über eine vorgegebene zweite Zeitdauer (Δt₂) in Richtung Werkstück (W) bewegt wird.

4. Verfahren nach Anspruch 1 oder 2, **dadurch gekennzeichnet, dass** während der Anschleichphase (AP) nach der Rückwärtsbewegung des Schweißdrahts (3) vom Werkstück (W) nach Detektion einer Berührung des Schweißdrahtendes (4) mit dem Werkstück (W) der Schweißdraht (3) eine vorgegebene Wegstrecke (Δl) in Richtung Werkstück (W) bewegt wird.

5. Verfahren nach einem der Ansprüche 1 bis 4, **dadurch gekennzeichnet, dass** die Anschleichphase (AP) eine vorgegebene Zeitspanne (Δt_{AP}) nach Beginn der Bewegungsphase (BP) eingeleitet wird.

6. Verfahren nach einem der Ansprüche 1 bis 5, **dadurch gekennzeichnet, dass** die Berührung des Schweißdrahtendes (4) mit dem Werkstück (W) über einen Einbruch der Schweißspannung (U) detektiert wird.

7. Verfahren nach einem der Ansprüche 1 bis 5, **dadurch gekennzeichnet, dass** die Berührung des Schweißdrahtendes (4) mit dem Werkstück (W) über eine Vorschubvorrichtung (7) für den Schweißdraht (3) ermittelt wird.

8. Verfahren nach einem der Ansprüche 1 bis 7, **dadurch gekennzeichnet, dass** die Rückwärtsgeschwindigkeit (v_{dR}) des Schweißdrahts (3) während der Anschleichphase (AP) größer ist, als die Positioniergeschwindigkeit (v_{R}) des Schweißbrenners (2) in Richtung Werkstück (W) während der Bewegungsphase (BP), insbesondere im Mittel mindestens 1,5 mal so groß, bevorzugt mindestens 2 mal so groß, besonders bevorzugt mindestens 5 mal so groß.

9. Verfahren nach einem der Ansprüche 1 bis 8, **dadurch gekennzeichnet, dass** die Vorwärtsbewegung des Schweißdrahts (3) in Richtung Werkstück (W) während der Anschleichphase (AP) nach Erreichen einer vorgegebenen maximalen freien Drahtlänge (lₛₒ) gestoppt wird.

10. Verfahren nach Anspruch 9, **dadurch gekennzeichnet, dass** die Vorwärtsbewegung des Schweißdrahts (3) in Richtung Werkstück (W) während der Anschleichphase (AP) vor der ersten Berührung des Schweißdrahtendes (4) mit dem Werkstück (W) nach Erreichen einer vorgegebenen maximalen freien Drahtlänge (lₛₒ) von 5 mm bis 50 mm, vorzugsweise 20 mm bis 30 mm, gestoppt wird.

11. Verfahren nach einem der Ansprüche 1 bis 10, **dadurch gekennzeichnet, dass** der Schweißdraht (3) während der Anschleichphase (AP) mit einer ersten vorgegebenen Vorwärtsgeschwindigkeit (v_{dV1}) zwischen 0,5 m/min und 200 m/min, insbesondere zwischen 1,5 m/min und 20 m/min, in Richtung Werkstück (W) bewegt wird.

12. Verfahren nach einem der Ansprüche 3 bis 11, **dadurch gekennzeichnet, dass** während der Anschleichphase (AP) nach der Rückwärtsbewegung des Schweißdrahts (3) vom Werkstück (W) nach Detektion einer Berührung des Schweißdrahtendes (4) mit dem Werkstück (W) der Schweißdraht (3) mit einer vorgegebenen zweiten Vorwärtsgeschwindigkeit (v_{dV2}) zwischen 0,5 m/min und 200 m/min, insbesondere zwischen 1 m/min und 10 m/min, in Richtung Werkstück (W) bewegt wird.

13. Verfahren nach einem der Ansprüche 2 bis 12, **dadurch gekennzeichnet, dass** während der Anschleichphase (AP) der Schweißdraht (3) mit einer vorgegebenen Rückwärtsgeschwindigkeit (v_{dR}) zwischen 0,5 m/min und 200 m/s, insbesondere zwischen 5 m/min und 60 m/min, vom Werkstück (W) wegbewegt wird.

14. Verfahren nach einem der Ansprüche 1 bis 13, **dadurch gekennzeichnet, dass** während der Anschleichphase (AP) eine vorgegebene Zeitdauer (Δt_{G}) nach der Detektion der ersten Berührung des Schweißdrahtendes (4) mit dem Werkstück (W), vorzugsweise nach 0 s bis 10 s, ein Schutzgas (G) aktiviert wird.

15. Schweißvorrichtung (1) zur Durchführung eines automatisierten Schweißverfahrens, mit einem Schweißbrenner (2) mit abschmelzbarem Schweißdraht (3), einer Schweißstromquelle (5), einer Vorschubvorrichtung (7) für den Schweißdraht (3) und einer Steuereinrichtung (6), **dadurch gekennzeichnet, dass** die Steuereinrichtung (6) zur Durchführung des Verfahrens nach einem der Ansprüche 1 bis 14 ausgebildet ist.
